# EUROPEAN PATENT SPECIFICATION

(11) **EP 2 477 427 B1**
(45) Date of publication and mention of the grant of the patent: **20.03.2013**
(21) Application number: 11290025.3
(22) Date of filing: 18.01.2011
(51) Int. Cl.: H04W 4/26

(54) **O&M Counters for Ran Sharing and Inter-Operator Billing**
O&M-Zähler zur gemeinsamen Nutzung eines Funkzugriffsnetzwerks und zur Abrechnung zwischen Betreibern
Compteurs O&M pour partager le RAN et facturation inter-opérateurs

(43) Date of publication of application: 18.07.2012
(73) Proprietor: Alcatel Lucent, 75007 Paris (FR)
(72) Inventor: Braun, Voker, 70176 Stuttgart (DE); Aydin, Osman, 70569 Stuttgart (DE); Zeller, Dietrich, 71067 Sindelfingen (DE); Mayer, Hans-Peter, 71254 Ditzingen (DE); Sigle, Rolf, 73630 Remshalden (DE)
(74) Representative: Wetzel, Emmanuelle

(56) References cited:
- EP-A1- 1 443 790
- EP-A2- 2 190 249
- US-A1- 2009 154 415
- NEC: "RAN sharing: use of subscriber PLMN id", 3GPP DRAFT; R3-071429-RAN SHARING USE OF SUBSCRIBER PLMN ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162257, [retrieved on 2007-08-15]
- "3rd Generation Partnership Project; Technical Specification Group Services and System Aspects; Network Sharing; Architecture and functional description (Release 10)", 3GPP STANDARD; 3GPP TS 23.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.1, 4 January 2011 (2011-01-04), pages 1-24, XP050462514, [retrieved on 2011-01-04]
- "3rd Generation Partnership Project; Technical Specification Group Services and System Aspects; Telecommunication management; Principles and high level requirements (Release 10)", 3GPP STANDARD; 3GPP TS 32.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 8 October 2010 (2010-10-08), pages 1-65, XP050461888, [retrieved on 2010-10-08]
- "3rd Generation Partnership Project; Technical Specification Group Services and System Aspects; Telecommunication management; Charging management; Charging architecture and principles (Release 10)", 3GPP STANDARD; 3GPP TS 32.240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 27 December 2010 (2010-12-27) , pages 1-44, XP050462392, [retrieved on 2010-12-27]
- "3rd Generation Partnership Project; Technical Specification Group Services and System Aspects; Telecommunication management; Charging management; Diameter charging applications (Release 9)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.6.0, 27 December 2010 (2010-12-27), pages 1-148, XP050462403, [retrieved on 2010-12-27]

## Description

The present document relates to radio access networks (RAN). In particular, the present document relates to methods and systems enabling multi-operator charging in a RAN.

Radio access network (RAN) sharing is considered important in order to reduce costs for mobile network operators, in particular in rural areas, and in order to enhance spectrum efficiencies by multiplexing gains due to spectrum pooling.

When sharing the RAN among multiple operators, the question arises how to charge the use of the shared network among the operators (i.e. business to business (B2B) billing among the multiple operators). This charging is different from B2C (business to consumer) user billing used by an operator to charge his customers for rendered services. Furthermore, each operator may wish to supervise whether the terms and conditions as agreed in a service level agreement are satisfied, e.g. whether the agreed average or peak data rates are delivered in the shared network.

It may be assumed without loss of generality that the RAN equipment is owned and operated by a RAN operator, and that the RAN equipment is used by at least two mobile operators, a first mobile network operator MN01 and a second mobile network operator MNO2. The mobile operators may be identified by two different PLMN IDs (Public Land Mobile Network identifiers). Various scenarios are possible, e.g. that the RAN operator is independent from the mobile network operators MN01 and MNO2, that the MNOs build a joint venture to operate the RAN or that one of the MNOs corresponds to the RAN operator. Typically, the MNOs will be charged by the RAN operator for use of the RAN.

The mobile network operators (MNOs) may form cooperation agreements e.g. MNO1 may provide the RAN infrastructure for the north of a country while MN02 may provide the RAN infrastructure for the south of that country. A subscriber of either MN01 or MN02 may have access to the RAN networks all over the country. Such a scheme may be considered sufficiently fair if e.g. the number of base station sites of MNO1 and MN02 is similar.

Fairness may become a problem with the above scheme if e.g. the subscriber numbers or densities are different among MNO1 and MNO2, if the traffic requirements among MNO1 and MN02 customers exhibit notable differences, e.g. MNO2 could attract far more data intensive smart phone users as compared to the MNO1, or if the network densities and/or architectures (e.g. cell sizes) among MNO1 and MN02 are different.

In particular, the growing demand for mobile data services may increase the interest of the MNOs to introduce more accurate capabilities for inter-operator billing in case of RAN sharing. The present document describes technical solutions for enabling such inter-operator billing scenarios in the context of RAN sharing. In particular, the present document describes solutions which may be implemented directly on the radio access network level, e.g. directly at a base station of the RAN.

US2009/0154415 describes a scheduling apparatus and method for proportional resource allocation among Mobile Virtual Network Operators.

According to an aspect, a radio base station for and/or in a radio access network is described. The radio access network (RAN) may e.g. be a GERAN, GSM, GPRS, EDGE, UTRAN (WCDMA) and/or eUTRAN (LTE) network and the radio base station may be base transceiver station (BTS), a NodeB and/or a eNB operating in such a RAN.

The radio base station may be configured to or adapted to connect to a plurality of core networks upstream of the radio base station. Such core network may be associated with a corresponding plurality of core network operators. As such, the radio base station may be shared by the plurality of core network operators. In other words, a user equipment (e.g. a portable electronic device such as a smart phone or a portable computer) may access the plurality of core networks via the shared radio base station. The term upstream may indicate the communication direction from the user equipment to the core network, whereas the term downstream may indicate the opposite direction from the core network to the user equipment.

The radio base station may comprise a radio transmission and/or reception unit configured to or adapted to establish a communication over a radio interface with the user equipment. As indicated above, the user equipment may be downstream of the radio base station. The radio base station may comprise an antenna which is interconnected with the radio transmission and/or reception unit and which is configured to or adapted to transmit and/or receive the physical radio signal for the communication with the user equipment.

The radio base station may comprise a processing unit. The processing unit may be configured to or adapted to determine a first of the plurality of core networks, wherein the first core network handles the communication with the user equipment upstream of the radio base station. In other words, the user equipment makes the communication using the first core network via the radio base station which is shared by a plurality of core networks. In order to determine the first core network, the processing unit may be configured to or adapted to send a plurality of identifiers of the corresponding plurality of core networks to the user equipment. By way of example, the radio base station may broadcast a plurality of public land mobile network identifier (PLMN IDs) associated with the plurality of core networks to the user equipment. This may be done by using a radio resource control (RRC) protocol of the RAN. In response to sending the plurality of identifiers, the processing unit may be configured to or adapted to receive a first identifier of the first core network from the user equipment. In particular, the PLMN ID of the first core network may be received at the base station. The PLMN ID may be received in the context of an access procedure of the user equipment to the first core network. This access procedure may make use of the RRC protocol.

The processing unit may be configured to or adapted to attribute resources to the communication with the user equipment. By way of example, the resources attributed to the communication may be a number of GERAN traffic channels (e.g. half rate or full rate channels) attributed to the communication; and/or a number of LTE resource elements and/or resource blocks attributed to the communication; and/or a number of WCDMA spreading codes attributed to the communication; and/or a number of packets transmitted on the uplink and/or downlink of the communication; and/or a number of bits transmitted on the uplink and/or downlink of the communication; and/or a power level used by the radio base station on the radio interface for the communication. As such, the resources attributed to the communication may be radio resource (such as bandwidth and/or power level) on the radio interface downstream of the radio base station and/or data traffic resources used within routing facilities (e.g. routers, switching matrices, routing queues) within the radio base station.

As such, the resources may be radio resources attributed to the communication on the radio interface between the radio base station and the user equipment. As indicated above, the radio resources may refer to the bandwidth of the radio interface attributed to the communication. Alternatively or in addition, the resources may be a data throughput of the communication in the downlink direction from the base station to the user equipment and/or in the uplink direction from the user equipment to the base station. The data throughput may refer to the bandwidth used within the routing facilities of the radio base station. Alternatively or in addition, the resources may be an energy consumed by the base station as a result of the communication. As indicated above, the base station may consume a certain amount of energy in order to establish and maintain the communication with the user equipment. As such, a certain amount of energy may be attributed by the base station to the communication.

The processing unit may be configured to or adapted to track an indication of the attributed resources associated with the first core network. In other words, the processing unit may provide an indication on the amount of resources which were attributed to the first core network and/or to the communication which the radio base station handles on behalf of the first core network.

The radio base station may comprise a memory unit (e.g. RAM and/or ROM). The indication may be tracked within a data record and the processing unit may be configured to or adapted to store the data record in the memory unit. As such, the base station may be configured to or adapted to provide a data record comprising an indication of the resources attributed to the first core network (e.g. during the communication of the user equipment to the first core network).

The processing unit may be configured to or adapted to attribute resources to a plurality of communications associated with the plurality of core networks. In other words, the base station may handle a plurality of communication on behalf of the plurality of core networks. In this case, the processing unit of the base station may be configured to or adapted to track a plurality of indications of the attributed resources associated with the plurality of core networks. The processing unit may provide and track an indication for each communication handled by the base station. The indications may be stored as data records.

Alternatively or in addition, the processing unit may be configured to or adapted to determine a cumulated indication for resources attributed to the first core network, wherein the cumulated indication reflects the cumulated attributed resources of some or all communications of the plurality of communications associated with the first core network. In other words, the base station may be configured to or adapted to provide a separate cumulated indication of the resources attributed to each of the plurality of core networks sharing the base station. The plurality of cumulated indications associated with the corresponding plurality of core networks may be stored in a plurality of data records.

The indication and/or the cumulated indication may be determined for a predetermined time interval. As such, the indication may be associated with a time tag, in order to indentify at what time the resources were attributed or consumed. Alternatively or in addition, the indication of the attributed resources may reflect a quality of service of the attributed resources. In other words, a level of the quality of service of the communication may be tracked along with the attributed resources. Alternatively or in addition, the indication may reflect a latency of data exchanged within the communication on the radio interface. In particular, an average and/or a maximum delay of data exchanged within the communication may be tracked along with the attributed resources.

The base station may comprise a network interface to the first core network. The base station may be configured to or adapted to provide the indication of the attributed resources to the first core network via the network interface. By way of example, the base station may be configured to or adapted to provide the data record comprising the indication of the attributed resources to the first core network. The indication and/or data record may be provided periodically and/or subject to a predetermined event (e.g. a request from the first core network).

Alternatively or in addition, the base station may comprise a management interface to an element manager. The base station may be configured to or adapted to provide the indication of the attributed resources to the element manager via the management interface. The indication and/or the data record may be provided periodically and/or subject to a predetermined event.

According to another aspect, an access network, e.g. a radio access network, comprising a RAN node and/or radio base station according to any of the aspects and features outlined in the present document is described. The radio access network may e.g. be a GERAN, GSM, EDGE, GPRS, UTRAN and/or eUTRAN network. The RAN may comprise a plurality of RAN nodes or radio base stations, wherein each RAN node or radio base station may be configured to or adapted to track an indication of attributed resources associated with a first core network. By way of example, in WCDMA the RAN node RNC and/or the Node B may be an entity tracking the indication of attributed resources or in case of GERAN or GSM the RAN node BSC and/or BTS may be an entity tracking the indication of attributed resources.

In addition, a special network element called a connector node may be employed in relation to the RAN. The connector node may be configured to or adapted to collect information from the different RAN nodes. In particular, the collector node may be configured to or adapted to collect the plurality of indications from the respective plurality of radio base stations. Furthermore, the collector node may be configured to or adapted to combine the plurality of indications in order to provide a combined indication of attributed resources associated with the first core network. In other words, the collector node may collect the indications and/or data records from the plurality of radio base stations and perform an aggregation of the indications and/or data records on a per core network basis. The collector node may provide a network interface to the plurality of core networks and/or a management interface to a management system.

According to a further aspect, a method for tracking attributed resources in a radio base station is described. The method may comprise establishing a communication over a radio interface with a user equipment. The method may proceed in determining a first of a plurality of core networks upstream of the radio base station, wherein the first core network handles the communication with the user equipment upstream of the radio base station. The method may comprise attributing resources to the communication with the user equipment; and tracking an indication of the attributed resources associated with the first core network.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

In accordance to the present invention, a radio base station as set forth in claim 1 and a method for tracking attributed resources as set forth in claim 14 are provided. Embodiments of the invention are claimed in the dependent claims.

The invention is explained below in an exemplary manner with reference to the accompanying drawings, wherein
Fig. 1 illustrates an example management reference model according to 3GPP TS 32.101;
Fig. 2 shows a mapping of an example RAN sharing method to the management reference model of Fig. 1;
Fig. 3 illustrates an example radio access network using long term evolution (LTE) technology;
Fig. 4 illustrates an example radio base station providing inter operator billing capabilities;
Fig. 5 illustrates an example protocol stack used for the communication between a radio base station and a user equipment;
Fig. 6 illustrates an example attach process of a user equipment to the radio access network and the core network of a selected network operator; and
Fig. 7 shows example means for radio resource allocation in the context of LTE.

Typical network sharing scenarios involve a first mobile network operator (MNO) owning a mobile network (RAN, core network, O&M and billing) and a second mobile service provider (MSP), typically a virtual MNO (VMNO) or an MNO not owning a RAN in the respective geographical area. The MSP is granted access to the MNO's network and is charged via the MNO's conventional per-user billing system.

This conventional per-user billing is described and specified in 3GPP TS 32.240/ 32.299. These protocols relate to a user equipment (UE) for which the charging records are collected in the core network (e.g. the EPC, i.e. the Enhanced packet core comprising an MME and/or SGW). However, there is no billing functionality implemented in the RAN / radio base stations. These standards address the subscriber charging as well as the mechanisms to implement subscriber related charging in a multi-operator related environment.

RAN network elements may measure a plurality of different parameters which may be used as input for RRM (radio resource management) algorithms and O&M (operation and management) counters. These measures may be used as an Input for Inter-operator accounting in case of RAN sharing, in order to enable a more fine-grained and fairer billing and operation of the shared radio access network.

It may be assumed that the O&M of a certain radio base station is under control of the RAN operator, while MNO1/MNO2 may or may not have (restricted or unrestricted) access to this O&M interface of the radio base station. Preferably, the MNOs have read-only access to the O&M interface of the radio base station, In order to have access to the data which is collected at the radio base station. In other words, it may be assumed that there is a first company that owns the radio base stations (i.e. the RAN) and connects them to the core of two (or more) MNOs (the first company can be one of the plurality of MNOs). This may be beneficial: for spectrum sharing e.g. of the digital dividend spectrum; in the context of in-building infrastructure provision wherein the building management acts as a RAN operator; for the provision of non CSG (closed subscriber group) Femto solutions; for RAN virtualisation; etc.

In such scenarios, the conventional per-user billing would be handled over different billing systems at the RAN operator side and at the MNO side. Hence the inter-operator charging mechanisms of 3GPP TS32.299 are not applicable. It is therefore suggested to address these different requirements by collecting resource usage data records for inter-operator charging purposes from RAN level equipment (rather than from core equipment on bearer resource usage level). It is proposed to implement inter-operator charging functions in the base stations, e.g. in the form of O&M counters. Such inter-operator charging aspects on a RAN level are not covered and addressed by the 3GPP TS 32.240 / 32.299 standards.

In the radio base station (or in another network node used in common by MN01 and MN02), dedicated performance counters may be implemented. These performance counters may e.g. be implemented as software code in the packet scheduling functions of the radio base station. Examples for such counters include:
● A counter indicating an amount of allocated radio resources (e.g. a number of physical resource blocks) or a traffic volume (e.g. above the Packet Data Convergence Protocol, referred to as PDCP, layer) per MNO. In other words, the traffic volume may be measured at some level in the protocol stack. By way of example, the traffic volume may be measured as MAC PDUs (packet data units) in the packet scheduler or in terms of IP packets above the PDCP layer. This means that there are multiple options for measuring the traffic volume, wherein the protocol overhead would depend on the measurement level. This enables B2B billing according to the actual usage of the radio access network.
● A counter indicating an amount of allocated radio resources (or traffic volume) per MNO, which may further be classified according to QoS parameters. This enables B2B billing according to service types and delay requirements.
● A counter indicating the amount of allocated radio resources (or traffic volume) per MNO, which may further be classified according to whether or not congestion is present on the air interface. The congestion state may be defined (e.g. within the service level agreement of MNO1 and MNO2) according to buffer filling states and/or latency measures (e.g. the time spent in the base station per IP packet). This enables B2B billing with separate tariffs for the congestion scenario, e.g. if MN01 is the RAN operator, MNO1 may wish to charge a higher tariff to MN02 in a congestion scenario, as MN01 is not able to optimally serve its users in this scenario.
• A counter indicating latency measures per MNO, e.g. the cumulated or average time spent in the base station per IP packet in a congestion case. This measure may possibly be combined with resource usage or traffic volume parameters. By way of example a product of the form SUM{ / * *V}* may be measured, where I denotes the actual packet delay and V denotes a packet size or resource usage parameter. Also counters indicating measures per MNO related with packets exceeding a maximum delay L could be measured, e.g. of the form SUM{ V} if / > L.
• A counter indicating the transmitted energy per MNO. Alternatively or in addition, a counter indicating the total consumed energy per MNO within a time interval may be determined. This enables B2B billing according to the energy consumption required for the transmission. This may become important due to the increasing cost of energy. Furthermore, this may be important in heterogeneous networks, where the transmit power requirements can differ by three orders of magnitude (e.g. 100mW in a Femto base station versus 40W in a Macro base station).
• A counter indicating the transmitted energy per MNO including an energy share per MNO required for common signaling such as pilot signals, broadcast channel etc. Other counters may include the number of users in connected mode per MNO. Such counters enable B2B billing according to the basic load of the base station.
• Any of the above mentioned counters taking into account the time of day. This may be important, as daytime and nighttime tariffs may differ. However, this aspect may also be handled within the O&M center and may not require a dedicated counter (and associated bandwidth for transmitting the counter to the 0&M center).

The above mentioned counters may be computed and/or statistically evaluated over a fixed or configurable time period. The counters may be transmitted as "Resource Usage Data Records (RUDR)" periodically or driven by a particular event. The different RUDRs may be grouped according to their PLMN IDs in order to associate the RUDR to the MNO.

The actual B2B billing may be based on a weighted combination of all or a subset of the above parameters. The weighting function which is used to combine the different counters could be agreed upon by the different MNOs e.g. within a service level agreement.

The RUDRs may be sent to a RUDR collector node within the RAN operator's network. The RUDR collector node may consolidate the RUDRs originating from a plurality of, e.g. all involved, network elements. The RUDR collector node and its interfaces to the respective network elements may be specified as a new functionality of the RAN. Alternatively, the RUDR collector node and its interfaces may be mapped on existing network nodes and interfaces like the "trace collector entity" used for eNodeB (eNB) traces or the Network Element Manager of the RAN network nodes. In all of these cases the configuration and activation of the RUDRs may be done via the RAN operator's OAM system (Network Element Manager).

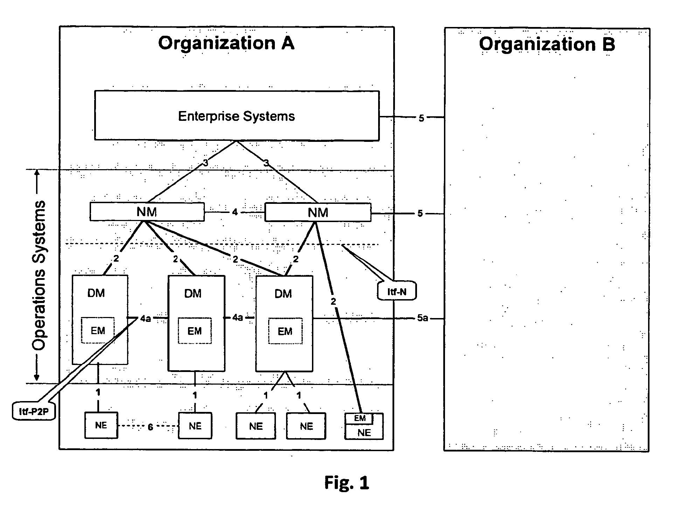

Fig. 1 illustrates the general management reference model used as a basis for the provisioning of counters for enabling B2B billing in the context of RAN sharing. This management reference model is in accordance to the 3GPP technical specification TS32.101. The reference model shows a hierarchical system comprising a plurality of network elements (NE) such as radio base stations. These network elements may be operated and managed using element managers (EM) which may be regrouped into domains, thereby providing higher level domain management (DM). The different domain management and/or element management systems may be regrouped into one or more network management systems (NM).

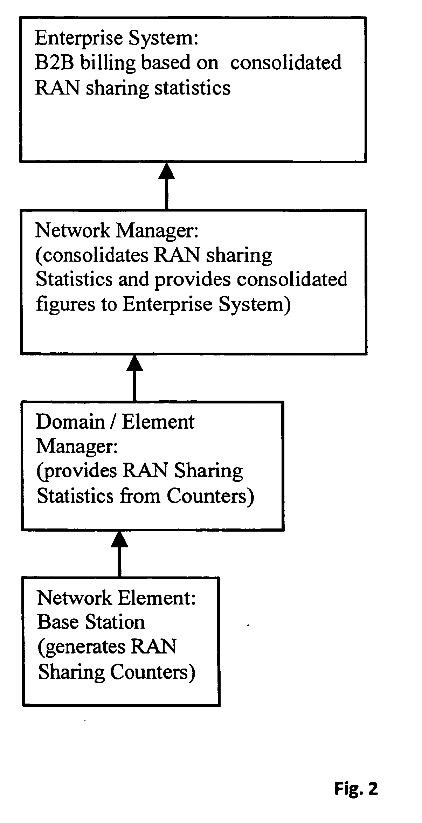

Fig. 2 illustrates the mapping of the B2B billing functionality into the management reference model of Fig. 1. The above mentioned counters and/or data records are generated in the operator's network elements (NE), e.g. in the RAN operator's radio base stations. The low level statistics represented by the counters and/or data records may be transformed to higher level statistics, such as averaged and/or consolidated low level statistics augmented by context information as e.g. day time. The higher level statistics may be generated by the network management system, and may be considered as part of the enterprise system for B2B billing. This is beneficial, as typically the RAN operator is the entity which will charge for the usage of its RAN. As such, the RAN operator may obtain information about the usage, performance, etc. of the RAN network via the RAN management system.

Alternatively, the B2B billing could be assisted by transferring the counters specified above over other network interfaces, e.g. the S1 interface or the S1-flex interface of the base station (e.g. the eNB). In the case of UMTS, the lu interface between the RNC and the MSC or SGSN may be used. For instance, the B2B relevant counters could be pre-analyzed in the base station (e.g. the evolved Node Bs (eNBs)) and could be provided to the core networks (CNs) or the management systems of the MNOs that are sharing the RAN. If the MNOs receive the counter information, the MNOs are in a position to use the information as a basis for agreeing on the compensation for the usage of the shared RAN. The information may be retrieved from the core network NEs (e.g. the Mobility Management Entity (MME) or the Service Gateway (SWG)) using the process depicted in Fig. 2. It should be noted, however, that the S1 interfaces of the RAN connect to network elements of a core network. Therefore, if the RAN operator is not a MNO, i.e. if the RAN operator does not have a core network, the RAN operator cannot be provided with the counter information, as the S1 interfaces connect to the core networks of the MNOs. In a similar manner, the usage of the S1 flex interface, where one eNB may be connected via several S1 interfaces to one or more MMEs of the core networks of one or more MNOs, may provide an additional complexity. In this case, it may need to be determined which part of the counter information should be provided (or not) to the one or more MMEs. Furthermore, it may need to be determined from which MMEs the statistics should be collected by the core network management systems. As will be outlined below, this attribution of counter information to the appropriate core network may be performed on the basis of the PLMN ID of the different MNOs.

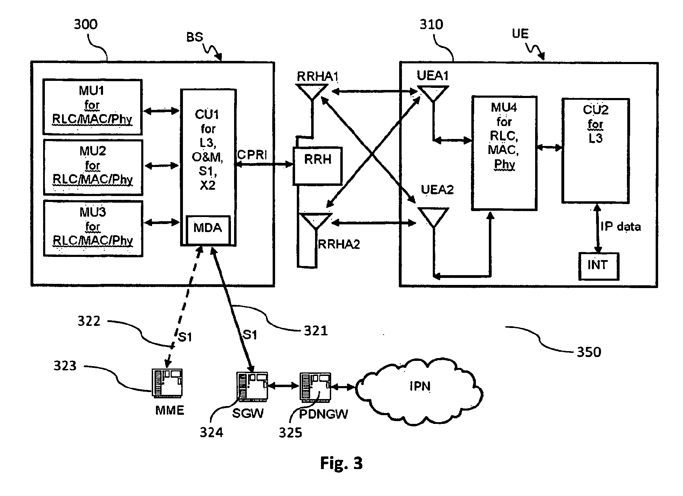

In the following, the methods and systems for providing usage information at a multi-operator base station will be outlined in the context of 3GPP LTE (Long Term Evolution). LTE relies on physical layer technologies, such as, Orthogonal Frequency Division Multiplexing (OFDM) and Multiple-Input Multiple-Output (MIMO) systems, and Smart Antennas. The main objectives of LTE are to minimize the system and User Equipment (UE) complexities, allow flexible spectrum deployment in existing or new frequency spectrum and to enable coexistence with other 3GPP Radio Access Technologies (RATs), such as GSM, EDGE, GPRS and UTRAN. An example LTE network configuration 350 is illustrated in Fig. 3

The evolved radio access network (RAN) for LTE comprises of a single type of node, i.e., the eNodeB (eNB) 300 that interfaces with the UE 310 (e.g. a mobile telephone, a smart phone, a portable electronic communication device, etc.). The eNB 300 hosts the PHYsical (PHY), Medium Access Control (MAC), Radio Link Control (RLC), and Packet Data Control Protocol (PDCP) layers that include the functionality of user-plane header compression and encryption. The eNB 300 also offers Radio Resource Control (RRC) functionality corresponding to the control plane. The eNB 300 may perform functions including radio resource management, admission control, scheduling, enforcement of negotiated UL (uplink) QoS (Quality of Service), cell information broadcast, ciphering/deciphering of user and control plane data, and compression/decompression of DL (downlink)/UL user plane packet headers. The LTE network 350 may comprise a Service Gateway (SGW) 324. The SGW 324 routes and forwards user data packets, while also acting as the mobility anchor for the user plane during inter-eNB handovers and as the anchor for mobility between LTE and other 3GPP technologies (terminating S4 interfaces and relaying the traffic between 2G/3G systems and the PDN GW 325). For idle state UEs 310, the SGW 324 terminates the DL data path and triggers paging when DL data arrives for the UE 310. The SGW 324 manages and stores UE 310 contexts, e.g. parameters of the IP bearer service, network internal routing information.

The LTE network 350 may comprise a Mobility Management Entity (MME) 323. The MME 323 is a main control node for the LTE access network. The MME 323 is responsible for idle mode UE 310 tracking and paging procedure including retransmissions. The MME 323 is involved in the bearer activation/deactivation process and is also responsible for choosing the SGW 324 for a UE 310 at the initial attach and at time of intra-LTE handover involving Core Network (CN) node relocation. The MME 323 is responsible for authenticating the user (by interacting with the HSS (Home Subscriber Server)). The Non-Access Stratum (NAS) signaling terminates at the MME 323 and the MME 323 is also responsible for generation and allocation of temporary identities to UEs 310. The MME 323 checks the authorization of the UE 310 to camp on the service provider's Public Land Mobile Network (PLMN) and enforces UE roaming restrictions. The MME 323 also provides the control plane function for mobility between LTE and 2G/3G access networks with the S3 interface terminating at the MME 323 from the SGSN (Serving GPRS Support Node). The MME 323 also terminates the S6a interface towards the home HSS for roaming UEs 310.

The LTE network may comprise a Packet Data Network Gateway (PDN GW) 325. The PDN GW 325 provides connectivity of the UE 310 to external packet data networks by being the point of exit and entry of traffic for the UE 310. A UE 310 may have simultaneous connectivity with more than one PDN GW 325 for accessing multiple PDNs. The PDN GW 325 performs policy enforcement, packet filtering for each UE 310, charging support, and packet screening. Another role of the PDN GW 325 is to act as the anchor for mobility between 3GPP and non-3GPP technologies such as WiMAX and 3GPP2 (CDMA 1X and EvDO).

The MME 323, the SGW 324 and the PDNGW 325 are typically part of the core network (CN) of a mobile operator. This means that in case of RAN sharing, the eNB 300 may be connected to a plurality of core networks, i.e. a plurality of MMEs 323 and/or SWG 324. This may be achieved by using an S1 flex interface as outlined below.

Fig. 3 also illustrates the S1-MME interface 322, i.e. the control plane protocol between the evolved UTRAN (EUTRAN) provided by the eNB 300 and the MME 323. The protocol over this interface 322 is eRANAP and it uses the Stream Control Transmission Protocol (SCTP) as the transport protocol. Furthermore, the S1-U interface 321 between the eUTRAN 300 and the SGW 321 for the per-bearer user plane tunneling and inter-eNB path switching during handover is illustrated. The transport protocol over this interface is GPRS Tunneling Protocol-User plane (GTP-U).

A feature of the LTE network is the S1-flex mechanism. The Sl-flex concept provides support for network redundancy and load sharing of traffic across network elements in the CN, the MME 323 and the SGW 324, by creating pools of MMEs 323 and SGWs 324 and by allowing each eNB 300 to be connected to multiple MMEs 323 and SGWs 324 in a pool. This function may enable network operators to reduce the cost of owning and operating the network by allowing the network operators to have separate CN (MME 323, SGW 324, PDN GW 325) while the eUTRAN (eNBs) is jointly shared by them. For this purpose, the S1-flex mechanism may be used to connect an eNB 300 to multiple CN entities.

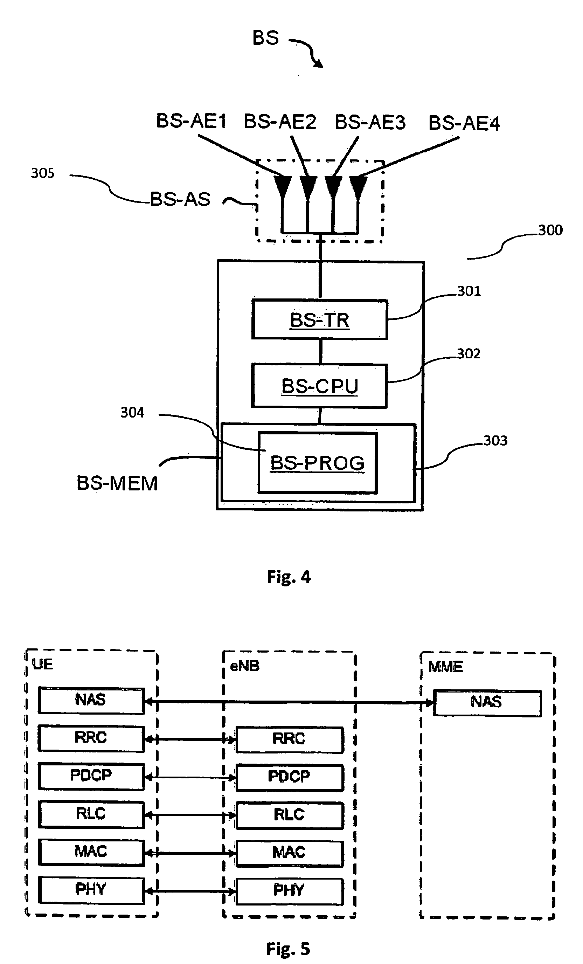

Fig. 4 illustrates the components of an example radio base station 300, e.g. the eNB 300 of Fig. 3. The base station 300 comprises a transmission unit 301 which is configured to manage the radio transmission and reception via the MIMO antenna array 305. The base station 300 further comprises a memory unit 303 which stores program instructions 304 for the operation of the base station 300. The program instructions 304 are executed on a central processing unit 302.

Fig. 5 shows the different protocol layers of the control plane and their location in the LTE architecture. In the control-plane, the NAS protocol, which runs between the MME 323 and the UE 310, is used for control purposes such as network attach, authentication, setting up of bearers, and mobility management. All NAS messages are ciphered and integrity protected by the MME 323 and UE 310. The RRC layer in the eNB 300 makes handover decisions based on neighbor cell measurements sent by the UE 310, pages for the UEs 310 over the air, broadcasts system information, controls UE 310 measurement reporting such as the periodicity of Channel Quality Information (CQI) reports and allocates cell-level temporary identifiers to active UEs 310. The RRC layer also executes transfer of UE context from the source eNB to the target eNB during handover, and does integrity protection of RRC messages. The RRC layer is responsible for the setting up and maintenance of radio bearers.

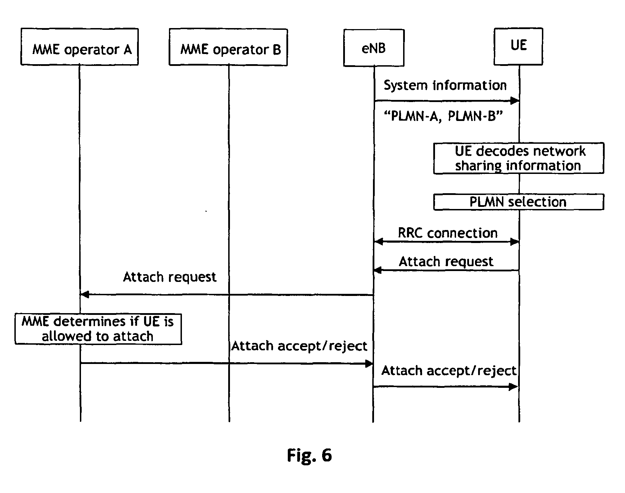

Fig. 6 shows a message flow chart indicating the attach process of a UE 310 to an eNB 300. As indicated above, the RRC layer may be used to broadcast system information from the eNB 300 to the UEs 310 in the vicinity of the eNB 300. This system information may comprise the PLMN-IDs of the network operators which are available via the particular eNB 300. In other words, the eNB 300 may inform a UE 310 about the network operators which share the particular eNB 300. The system information may be broadcasted in a dedicated system information message, e.g. a system information block (SIB). The UE 310 decodes the network sharing information and selects one of the possible PLMN. This selection may be performed manually and/or automatically by the UE 310 in accordance with predetermined preference settings.

Subsequent to the selection of the PLMN, the UE 310 issues an attach request to the eNB 300 for the selected PLMN. The eNB 300 forwards the request to the MME 323 of the selected operator. In other words, when a UE 310 attaches to the network, the UE 310 is connected to the appropriate CN entities based on the identity of the network operator (the PLMN ID) sent by the UE 310. The MME 323 determines if the UE 310 is authorized to attach to the network of the selected network operator and replies by sending an attach accept or reject message to the UE 310 via the eNB 300.

As can be seen in Fig. 6, the eNB 300 receives the PLMN-ID of the selected network operator from the UE 310 and uses the PLMN-ID to identify the appropriate CN, i.e. the appropriate MME 323, in order to forward the attach request. As such, the eNB 300 can attribute the resources which are used for the connection to the UE 310 to the selected network operator based on the PLMN-ID. In other words, the allocation of consumed network resources to the different network operators which share an eNB 300 may be performed using the PLMN-ID transmitted from the UE 310 to the eNB 300 within the attach request during setup of a connection.

During handover information is passed from the source eNB to the target eNB allowing the target eNB to identify the core network serving the UE.. As such, the PLMN ID which is attributed to a running connection will be provided to the target eNB during handhover. Consequently, the target eNB can use the PLMN ID, in order to attribute the consumed resources of the running connection to a particular network operator.

In the following, further details are provided on how radio resources may be allocated to a plurality of radio links in the context of LTE. As indicated above, the radio resources consumed by the different network operators may be tracked by the eNB 300 and used as a basis for performing inter-operator charging.

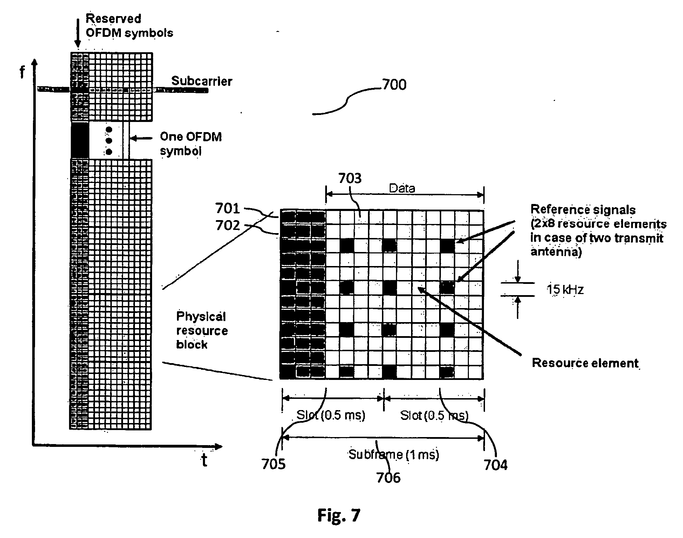

As outlined above, LTE makes use of OFDM. OFDM uses a large number of narrowband sub-carriers or tones for multi-carrier transmission. The basic LTE downlink physical resource can be explained using a time-frequency grid 700, as illustrated in Fig. 7. In the frequency domain, the spacing between the sub-carriers 701, 702, Δf, is 15kHz. In addition, the OFDM symbol duration time is 1/Δf + cyclic prefix. The cyclic prefix is used to maintain orthogonally between the sub-carriers 701, 702, even for a time-dispersive radio channel. One resource element 703 carries QPSK, 16QAM or 64QAM modulated bits, i.e. each resource element 703 may carry 2, 4 or 6 bits depending on the modulation scheme. The OFDM symbols are grouped into resource blocks 704, 705. The resource blocks 704, 705 have a total size of 180kHz (12 x 15kHz) in the frequency domain and 0.5ms (7 OFDM symbols) in the time domain.

Each UE 310 is allocated a number of resource blocks 704, 705 in the time-frequency grid 700. The more resource blocks 704, 705 a UE 310 receives and the higher the modulation used in the resource elements 703, the higher the bitrate. Which and how many resource blocks 704, 705 a UE 310 receives at a given point of time depends on advanced scheduling mechanisms in the frequency and time dimensions. Scheduling of resources can be performed every millisecond. Two resource blocks 704, 705, which are 180kHz wide and in total one ms in length are referred to as a scheduling block 706. The scheduling mechanisms in LTE are implemented on the MAC layer which is terminated in the eNB 300 and the UE 310, respectively, as can be seen in Fig. 5. As such, the eNB 300 is aware of the resources which have been scheduled to the different UE 310 served by an eNB 300.

Overall, it has been shown that the eNB 300 is aware of the network operators which provide network services to a UE 310. This information may be drawn from the PLMN-ID transmitted from the UE 310 to the eNB 300 using the RRC protocol. Furthermore, the eNB 300 is aware of the resources which are scheduled to the UE 310. This information can be drawn from the scheduling information exchanged on the MAC layer. As such, the eNB 300 may be configured to track the consumed network resources of the eNB 300 on a per network operator basis. This tracking may be implemented by dedicated program instructions 304 which are executed by the central processing unit 302. The collected information on the consumed network resources may be stored, e.g. as data records, in the memory unit 303 of the eNB 300. The stored information may be retrieved from the eNB 300 via the Element Manager (EM) of the eNB 300 (see Fig. 1) and/or via the S1 interfaces 322, 321 to the core network (CN) of the respective network operators. The use of the S1 interfaces 322, 321 for the transmission of the usage information may require standardization of the S1 interfaces 322, 321. For the retrieval via the Element Managers proprietary implementations may be provided.

An advantage of the described billing mechanisms implemented in the RAN (e.g the base station) is that the charging can take into account the amount of consumed physical radio resources, such as resource blocks (in the case of LTE) or spreading codes (in the case of WCDMA/UTRAN) and/or the transmit power. The transmit power may be particularly important in heterogeneous networks comprising various sizes of cells (provided e.g. by a femto base station and/or a macro base station). In such networks, the transmit power required to transfer a predetermined amount of data can vary by 3 to 4 orders of magnitude from a femto to a macro base station.

It should be noted that the proposed billing mechanisms do not relate to a UE context, but rather to billing records which are specific for each of the operators participating in the RAN sharing. In other words, the usage data is tracked on a per operator and/or per core network basis and not on a per user equipment and/or per user basis.

In the present document, a method and system of providing resource consumption data on a per operator basis directly at a radio base station have been described. The described methods and systems are an enabler for traffic-and energy-aware inter-operator B2B billing in case of RAN sharing. They do not require any modifications of existing network architectures and may be implemented as SW features on the radio base stations with low computational complexity. The described methods and systems may be particularly beneficial to LTE-Advanced eNBs and the respective O&M network.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A radio base station (300) for a radio access networks enabling multi-operator charging in the radio access network, wherein the radio base station (300) is adapted to connect to a plurality of core networks (323, 324) upstream of the radio base station (300); the radio base station (300) comprising
- a radio transmission and/or reception unit (301) adapted to establish a communication over a radio interface (305) with a user equipment (310);
- a processing unit (302) adapted to
- determine a first of the plurality of core networks (323, 324), wherein the first core network (323, 324) handles the communication with the user equipment (310) upstream of the radio base station (300);
- attribute resources to the communication with the user equipment (310); and
- track an indication of the attributed resources associated with the first core network (323, 324); wherein a separate indication is tracked for each communication handled by the base station (300);
- a network interface (321, 322) to the first core network (323, 324), wherein the base station (300) is adapted to provide the indication of the attributed resources to the first core network (323, 324) via the network interface (321, 322).

2. The base station (300) of claim 1, wherein
- the radio base station (300) further comprises a memory unit (304);
- the Indication is tracked within a data record; and
- the processing unit (302) is adapted to store the data record in the memory unit (304).

3. The base station (300) of any previous claim, wherein the resources are at least one of:
- radio resources attributed to the communication on the radio interface (305) between the radio base station (300) and the user equipment (310);
- data throughput of the communication in downlink direction from the base station (300) to the user equipment (310) and/or in uplink direction from the user equipment (310) to the base station (300); and
- energy consumed by the base station (300) as a result of the communication.

4. The base station (300) of any previous claim, wherein the indication of the attributed resources
- reflects a quality of service of the attributed resources; and/or
- reflects a latency of data exchanged within the communication on the radio interface (305);
- reflects a maximum delay of data exchanged within the communication on the radio interface (305); and/or
- reflects a time when the resources were attributed.

5. The base station (300) of any previous claim, wherein the processing unit (302) is adapted to
- send a plurality of Identifiers of the corresponding plurality of core networks (323, 324) to the user equipment (310); and
- in response thereto, receive a first identifier of the first core network (323, 324) from the user equipment (310).

6. The base station (300) of claim 5, wherein the first identifier is a public land mobile network identifier associated with the first core network (323, 324) received via a radio resource control layer of the radio access network.

7. The base station (300) of any previous claim, further comprising
- a management interface to an element manager, wherein the base station (300) is adapted to provide the indication of the attributed resources to the element manager via the management interface.

8. The base station (300) of any previous claim, wherein the processing unit (302) is adapted to
- attribute resources to a plurality of communications associated with the plurality of core networks (323, 324); and
- track a plurality of indications of the attributed resources associated with the plurality of core networks (323, 324).

9. The base station (300) of claim 8, wherein the processing unit (302) is adapted to
- determine a cumulated indication for the first core network (323, 324), wherein the cumulated indication reflects the cumulated attributed resources of all communications of the plurality of communications associated with the first core network (323, 324).

10. The base station (300) of claim 9, wherein the cumulated indication is determined for a predetermined time interval.

11. The base station (300) of any of the previous claims, wherein the radio base station (300) is an evolved Node B in a Long Term Evolution network.

12. An Access Network comprising a radio base station (300) according to any of claims 1 to 11.

13. The access network of claim 12, comprising
- a plurality of radio base stations (300) according to any of claims 1 to 11, wherein each radio base station (300) is adapted to track an indication of attributed resources associated with a first core network (323, 324) of a plurality of core networks; and
- a collector node adapted to
- collect the plurality of indications from the respective plurality of radio base stations (300);
- combine the plurality of indications to provide a combined indication of attributed resources associated with the first core network (323, 324).

14. A method for tracking attributed resources in a radio base station adapted to connect of core networks upstream of the radio base station in order to enable multi-operator charging in a radio access network (300), the method comprising
- establishing a communication over a radio interface (305) with a user equipment (310);
- determining a first of a plurality of core networks (323, 324) upstream of the radio base station, wherein the first core network (323, 324) handles the communication with the user equipment (310) upstream of the radio base station (300);
- attributing resources to the communication with the user equipment (310);
- tracking an indication of the attributed resources associated with the first core network (323, 324); wherein a separate indication is tracked for each communication handled by the base station (300); and
- providing the indication of the attributed resources to the first core network (323, 324) via a network interface (321, 322).

## Patentansprüche

1. Funkbasisstation (300) für ein Funkzugangsnetzwerk, welche die Abrechnung zwischen Betreibern in dem Funkzugangsnetzwerk ermöglicht, wobei die Funkbasisstation (300) für den Anschluss an eine Vielzahl von Kernnetzwerken (323, 324) stromaufwärts der Funkbasisstation (300) ausgelegt ist; wobei die Funkbasisstation (300) umfasst:
- Eine Funkübertragungs- und/oder -empfangseinheit (301), ausgelegt für das Herstellen einer Kommunikation über eine Funkschnittstelle (305) mit einem Teilnehmergerät (310);
- eine Verarbeitungseinheit (302), ausgelegt für
- das Ermitteln eines ersten der Vielzahl von Kernnetzwerken (323, 324), wobei das erste Kernnetzwerk (323, 324) die Kommunikation mit dem Teilnehmergerät (310) stromaufwärts der Funkbasisstation (300) abwickelt;
- das Zuteilen von Ressourcen an die Kommunikation mit dem Teilnehmergerät (310); und
- das Verfolgen einer Angabe der zugeteilten mit dem ersten Kernnetzwerk (323, 324) assoziierten Ressourcen; wobei für jede von der Basisstation (300) abgewickelte Kommunikation eine separate Angabe verfolgt wird;
- eine Netzwerkschnittstelle (321, 322) zu dem ersten Kernnetzwerk (323, 324), wobei die Basisstation (300) für das Bereitstellen der Angabe der zugeteilten Ressourcen an das erste Kernnetzwerk (323, 324) über die Netzwerkschnittstelle (321, 322) ausgelegt ist.

2. Basisstation (300) nach Anspruch 1, wobei
- die Funkbasisstation (300) weiterhin eine Speichereinheit (304) umfasst;
- die Angabe innerhalb eines Datensatzes verfolgt wird; und
- die Verarbeitungseinheit (302) für das Speichern des Datensatzes in der Speichereinheit (304) ausgelegt ist.

3. Basisstation (300) nach einem der vorstehenden Ansprüche, wobei die Ressourcen mindestes eine der folgenden sind:
- Funkressourcen, die der Kommunikation auf der Funkschnittstelle (305) zwischen der Funkbasisstation (300) und dem Teilnehmergerät (310) zugeteilt werden;
- Datendurchsatz der Kommunikation in Downlink-Richtung von der Basisstation (300) zum Teilnehmergerät (310) und/oder in Uplink-Richtung von dem Teilnehmergerät (310) zur Basisstation (300); und
- Energie, die von der Basisstation (300) als Ergebnis der Kommunikation verbraucht wird.

4. Basisstation (300) nach einem beliebigen der vorstehenden Ansprüche, wobei die Angabe der zugeteilten Ressourcen
- eine Dienstgüte der zugeteilten Ressourcen widerspiegelt; und/oder
- eine Latenz von innerhalb der Kommunikation auf der Funkschnittstelle (305) ausgetauschten Daten widerspiegelt;
- eine maximale Verzögerung von innerhalb der Kommunikation auf der Funkschnittstelle (305) ausgetauschten Daten widerspiegelt; und/oder
- einen Zeitpunkt, zu welchem die Ressourcen zugeteilt wurden, widerspiegelt.

5. Basisstation (300) nach einem beliebigen der vorstehenden Ansprüche, wobei die Verarbeitungseinheit (302) dazu ausgelegt ist,
- eine Vielzahl von Kennungen der entsprechenden Vielzahl von Kernnetzwerken (323, 324) an das Teilnehmergerät (310) zu senden; und
- in Reaktion darauf eine erste Kennung des ersten Kernnetzwerks (323, 324) von dem Teilnehmergerät (310) zu empfangen.

6. Basisstation (300) nach Anspruch 5, wobei die erste Kennung eine mit dem ersten Kernnetzwerk (323, 324) assoziierte, über eine Funkressourcensteuerungsschicht des Funkzugangsnetzwerks empfangene Kennung des öffentlichen terrestrischen Mobilfunknetzwerks ist.

7. Basisstation (300) nach einem beliebigen der vorstehenden Ansprüche, weiterhin umfassend
- eine Verwaltungsschnittstelle zu einem Element-Manager, wobei die Basisstation (300) für das Bereitstellen der Angabe der zugeteilten Ressourcen an den Element-Manager über die Verwaltungsschnittstelle ausgelegt ist.

8. Basisstation (300) nach einem beliebigen der vorstehenden Ansprüche, wobei die Verarbeitungseinheit (302) ausgelegt ist für
- das Zuteilen von Ressourcen an eine Vielzahl von mit der Vielzahl von Kernnetzwerken (323, 324) assoziierten Kommunikationen; und
- das Verfolgen einer Vielzahl von Angaben der mit der Vielzahl von Kernnetzwerken (323, 324) assoziierten zugeteilten Ressourcen.

9. Basisstation (300) nach Anspruch 8, wobei die Verarbeitungseinheit (302) dazu ausgelegt ist,
- eine kumulierte Angabe für das erste Kernnetzwerk (323, 324) zu bestimmen, wobei die kumulierte Angabe die kumulierten zugeteilten Ressourcen aller Kommunikationen der Vielzahl von mit dem ersten Kernnetzwerk (323, 324) assoziierten Kommunikationen widerspiegelt.

10. Basisstation (300) nach Anspruch 9, wobei die kumulierte Angabe für ein vorgegebenes Zeitintervall bestimmt wird.

11. Basisstation (300) nach einem beliebigen der vorstehenden Ansprüche, wobei die Funkbasisstation (300) ein Evolved Node B in einem Long Term Evolution-Netzwerk ist.

12. Zugangsnetzwerk mit einer Funkbasisstation (300) gemäß einem beliebigen der Ansprüche 1 bis 11.

13. Zugangsnetzwerk nach Anspruch 12, umfassend:
- Eine Vielzahl von Funkbasisstationen (300) gemäß einem beliebigen der Ansprüche 1 bis 11, wobei jede Funkbasisstation (300) für das Verfolgen einer Angabe von mit einem ersten Kernnetzwerk (323, 324) einer Vielzahl von Kernnetzwerken assoziierten zugeteilten Ressourcen ausgelegt ist; und
- einen Kollektorknoten, welcher dazu ausgelegt ist,
- eine Vielzahl von Angaben von der jeweiligen Vielzahl von Funkbasisstationen (300) zu sammeln;
- die Vielzahl von Angaben zu kombinieren, um eine kombinierte Angabe von mit dem ersten Kernnetzwerk (323, 324) assoziierten zugeteilten Ressourcen bereitzustellen.

14. Verfahren zur Verfolgung von zugeteilten Ressourcen in einer Funkbasisstation (300), welche für den Anschluss an eine Vielzahl von Kernnetzwerken stromaufwärts der Funkbasisstation ausgelegt ist, um ein Wechseln zwischen mehreren Betreibern in einem Funkzugangsnetzwerk zu ermöglichen, wobei das Verfahren umfasst:
- Herstellen einer Kommunikation über eine Funkschnittstelle (305) mit einem Teilnehmergerät (310);
- Bestimmen einer ersten Vielzahl von Kernnetzwerken (323, 324) stromaufwärts der Funkbasisstation, wobei das erste Kernnetzwerk (323, 324) die Kommunikation mit dem Teilnehmergerät (310) stromaufwärts der Funkbasisstation (300) abwickelt;
- Zuteilen von Ressourcen an die Kommunikation mit dem Teilnehmergerät (310);
- Verfolgen einer Angabe der mit dem ersten Kernnetzwerk (323, 324) assoziierten zugeteilten Ressourcen; wobei für jede von der Basisstation (300) abgewickelte Kommunikation eine separate Angabe verfolgt wird; und
- Bereitstellen der Angabe der zugeteilten Ressourcen an das erste Kernnetzwerk (323, 324) über eine Netzwerkschnittstelle (321, 322).

## Revendications

1. Station de base (300) radioélectrique pour un réseau d'accès radioélectrique permettant la taxation multiopérateur dans le réseau d'accès radioélectrique, la station de base (300) radioélectrique étant adaptée pour se connecter à une pluralité de réseaux centraux (323, 324) en amont de la station de base (300) radioélectrique ; la station de base (300) radioélectrique comprenant
- une unité d'émission et/ou de réception radioélectrique (301) adaptée pour établir la communication par le biais d'une interface radioélectrique (305) avec un équipement d'utilisateur (310) ;
- une unité de traitement (302) adaptée pour
- déterminer un premier de la pluralité de réseaux centraux (323, 324), le premier réseau central (323, 324) gérant la communication avec l'équipement d'utilisateur (310) en amont de la station de base (300) radioélectrique ;
- attribuer des ressources à la communication avec l'équipement d'utilisateur (310) ; et
- suivre une indication des ressources attribuées associées au premier réseau central (323, 324), une indication séparée étant suivie pour chaque communication gérée par la station de base (300) radioélectrique ;
- une interface de réseau (321, 322) vers le premier réseau central (323, 324), la station de base (300) étant adaptée pour fournir l'indication des ressources attribuées au premier réseau central (323, 324) par le biais de l'interface de réseau (321, 322).

2. Station de base (300) selon la revendication 1, avec laquelle
- la station de base (300) radioélectrique comprend en outre une unité de mémoire (304) ;
- l'indication est suivie à l'intérieur d'un enregistrement de données ; et
- l'unité de traitement (302) est adaptée pour stocker l'enregistrement de données dans l'unité de mémoire (304).

3. Station de base (300) selon l'une quelconque des revendications précédentes, avec laquelle les ressources sont au moins l'une des suivantes :
- ressources radioélectriques attribuées à la communication sur l'interface radioélectrique (305) entre la station de base (300) radioélectrique et l'équipement d'utilisateur (310) ;
- débit de données de la communication dans le sens de la liaison descendante de la station de base (300) vers l'équipement d'utilisateur (310) et/ou dans le sens de la liaison montante de l'équipement d'utilisateur (310) vers la station de base (300) ; et
- énergie consommée par la station de base (300) en résultat de la communication.

4. Station de base (300) selon l'une quelconque des revendications précédentes, avec laquelle l'indication des ressources attribuées :
- reflète une qualité de service des ressources attribuées ; et/ou
- reflète une latence des données échangées au sein de la communication sur l'interface radioélectrique (305) ;
- reflète un retard maximum des données échangées au sein de la communication sur l'interface radioélectrique (305) ; et/ou
- reflète un moment où les ressources ont été attribuées.

5. Station de base (300) selon l'une quelconque des revendications précédentes, avec laquelle l'unité de traitement (302) est adaptée pour
- envoyer une pluralité d'identifiants de la pluralité correspondante de réseaux centraux (323, 324) à l'équipement d'utilisateur (310) ; et
- en réponse à cela, recevoir un premier identifiant du premier réseau central (323, 324) de la part de l'équipement d'utilisateur (310).

6. Station de base (300) selon la revendication 5, avec laquelle le premier identifiant est un identifiant de réseau mobile terrestre public associé avec le premier réseau central (323, 324) reçu par le biais d'une couche de commande des ressources radioélectriques du réseau d'accès radioélectrique.

7. Station de base (300) selon l'une quelconque des revendications précédentes, comprenant en outre
- une interface de gestion vers un gestionnaire d'élément, la station (300) étant adaptée pour fournir l'indication des ressources attribuées au gestionnaire d'élément par le biais de l'interface de gestion.

8. Station de base (300) selon l'une quelconque des revendications précédentes, avec laquelle l'unité de traitement (302) est adaptée pour
- attribuer des ressources à une pluralité de communications associées avec la pluralité de réseaux centraux (323, 324) ; et
- suivre une pluralité d'indications des ressources attribuées associées avec la pluralité de réseaux centraux (323, 324).

9. Station de base (300) selon la revendication 8, avec laquelle l'unité de traitement (302) est adaptée pour
- déterminer une indication cumulée pour le premier réseau central (323, 324), l'indication cumulée reflétant les ressources attribuées cumulées de toutes les communications de la pluralité de communications associées avec le premier réseau central (323, 324).

10. Station de base (300) selon la revendication 9, avec laquelle l'indication cumulée est déterminée pour un intervalle de temps prédéterminé.

11. Station de base (300) selon l'une quelconque des revendications précédentes, avec laquelle la station de base (300) radioélectrique est un noeud B évolué d'un réseau à évolution à long terme.

12. Réseau d'accès comprenant une station de base (300) radioélectrique selon l'une quelconque des revendications 1 à 11.

13. Réseau d'accès selon la revendication 12, comprenant
- une pluralité de stations de base (300) radioélectriques selon l'une quelconque des revendications 1 à 11, avec lequel chaque station de base (300) radioélectrique est adaptée pour suivre une indication des ressources attribuées associées avec un premier réseau central (323, 324) d'une pluralité de réseaux centraux ; et
- un noeud collecteur adapté pour
- collecter la pluralité d'indications auprès de la pluralité respective de stations de base (300) radioélectriques ;
- combiner la pluralité d'indications pour fournir une indication combinée des ressources attribuées associées avec le premier réseau central (323,324).

14. Procédé de suivi des ressources attribuées dans une station de base (300) radioélectrique adaptée pour se connecter à une pluralité de réseaux centraux en amont de la station de base radioélectrique afin de permettre la taxation multiopérateur dans un réseau d'accès radioélectrique, le procédé comprenant les étapes suivantes :
- établissement d'une communication par le biais d'une interface radioélectrique (305) avec un équipement d'utilisateur (310) ;
- détermination d'un premier d'une pluralité de réseaux centraux (323, 324) en amont de la station de base radioélectrique, le premier réseau central (323, 324) gérant la communication avec l'équipement d'utilisateur (310) en amont de la station de base (300) radioélectrique ;
- attribution de ressources à la communication avec l'équipement d'utilisateur (310) ;
- suivi d'une indication des ressources attribuées associées au premier réseau central (323, 324), une indication séparée étant suivie pour chaque communication gérée par la station de base (300) radioélectrique ; et
- fourniture de l'indication des ressources attribuées associées au premier réseau central (323, 324) par le biais d'une interface de réseau (321, 322).
